# EUROPEAN PATENT SPECIFICATION

(11) **EP 2 051 536 B1**
(45) Date of publication and mention of the grant of the patent: **02.09.2009**
(21) Application number: 07020542.2
(22) Date of filing: 19.10.2007
(51) Int. Cl.: H04Q 3/00, G06F 17/30

(54) **Method for migrating subscriber data from a legacy application to a replacement application of a telecommunications network**
Verfahren zur Migration von Teilnehmerdaten von einer Altanwendung auf eine Ersatzanwendung eines Telekommunikationsnetzes
Procédé de migration de données d'abonné d'une application préexistante vers une application de remplacement d'un réseau de télécommunication

(43) Date of publication of application: 22.04.2009
(73) Proprietor: LUCENT TECHNOLOGIES INC., Murray Hill NJ 07974-0636 (US)
(72) Inventor: Logan, Ian, Chippenham Wiltshire SN15 3GA (GB)
(74) Representative: Cockayne, Gillian

(56) References cited:
- EP-A- 1 827 033
- US-A- 6 098 076
- US-B1- 7 013 139

## Description

### Background of the Invention

The invention relates to a method for migrating subscriber data from a legacy application to a replacement application of a telecommunications network as well as to a telecommunications network.

Telephony services have encountered great success over the past decade based on the provision of voice and data related services delivered over a traditional circuit switched network. Continuing advances in hardware technology have increased enormously the scalability and capacity of the individual network elements that provide legacy services, such that it is not uncommon for the profile data associated with tens of millions of subscribers to be stored on a single element. Futhermore, the drive towards increased service provision ensures that the profile data associated/stored with each individual subscriber multiplies in size and complexity.

Increased subscriber sophistication and insatiable demand combined with the network operator's desire to create and launch new and innovative revenue generating services within those networks (whilst still maintaining existing services and functionality) breeds an environment where the existing service providing elements rapidly become outdated and in need of replacement.

A typical method of service replacement is to create a new physical element/application that maintains the existing behaviour and functionality whilst extended and providing for new and enhanced functionality. The new element/application can only become active in the network when all existing subscriber data is transferred from the old element to the new one with the associated redirection of network traffic.

This seemingly simple act presents a conundrum: subscriber data changes to varying degrees and varying frequencies. To migrate subscriber data from the old element to the new one takes an amount of time. This time interval increases as platform capacity grows (more subscribers to be migrated), and as data profiles become larger and more complex. Major operator battlegrounds are service availabilty and quaility, therefore traffic must always be serviced - as a result as soon as a copy of the subscriber data is taken from the source system it becomes obselete as it may have already changed by the subscriber making a call.

If a subscriber is serviced by the new element which contains obselete data, end user impacts can vary from complete service outage, inconsistent service behavior, poor quality and loss of money. Operator impacts can vary from inconsistent financial reporting, potential fraud and subscriber churn. Typical approachs to this problem, vary operator by operator, and country by country - in the past operators have chosen to either accept the multiple sources of risk, inhibit service for the migration window, combined with performing acitvities during low traffic/overnight windows.

From US 7,013,139 a method for migrating a home location register (HLR) containing subscriber data has become known. In the method, a subscriber diversion is implemented before subscriber data is sequentially transferred from one HLR node to another. The diversion redirects particular subscriber transactions from the second to the first HLR node if the subscriber has not been migrated from the first HLR node. The method allows the transfer to be implemented while the network HLR function remains on-line.

US 2003/0028555 A1 discloses a method for database migration which migrates a database in one single bulk migration without the loss of any data. The method can accomplish bulk migration because it uses a wrapper script that automates all the scripts required for the migration. As the method migrates the enrire database in one bulk, it uses very little system downtime.

US-A-6 098 076 discloses a method of performing database migration between pairs of Service Control Points (SCPs) of an Advanced Intelligent Network (AIN). In the method, customer records from a specific range of phone system numbers (PSNs) are transferred from a first pair of Service Control Points to a second pair of Service Control Points. During the transfer of customer records, the possibility to modify the customer records is disabled until the transfer of data has been finished. Modification queries are redirected to both SCP pairs only after the end of the transfer of customer records.

However, the above and further existing methods in this space are focussed on providing one solution to one very specific technical aspect of a specific vendor element and do not address the end to end requirements and impacts surrounding all aspects of element data migration and have provision only for traditional circuit switched networks and architectures. In other words, the

existing methods either refer specifically to a network element such as a HLR or detail a method that focusses on solving a technical issue in an element rather than a network/system wide perspective.

As the lifecycle of network elements is becoming increasingly shorter, more frequent and lengthy migrations are required. As networks mature, subscribers demand 100% availability and regional regulatory bodies increasingly impose legal auditing/tracking requirements upon network operators, the traditional/historical approaches to migration become unusable. In addition, the industry as a whole will undergo a wholesale evolution to IMS and next-generation networks - necessitating a more encompassing, reliable and repeatable migration approach.

### Object of the Invention

It is the object of the invention to provide a method for migrating subscriber data and a telecommunications network with an architecture which address the end to end aspects of data migration regardless of element-specific constraints and in particular allow for roll-back in the event of failure.

### Summary of the Invention

This object is achieved by a method as described above, comprising the steps of: in a migration means, transferring the subscriber data from the legacy application to the replacement application; in a redirection means, directing network and/or operator transactions related to the subscriber data to at least one of the legacy application and the replacement application; in a network means, sending network transactions related to the subscriber data to the redirection means, in an operator means sending operator transactions related to the subscriber data to the redirection means, wherein the redirection means redirects the network and/or operator transactions during the migration selectively to at least one of the legacy application and the replacement application in dependence of the volatility of the subscriber data of the application which is migrated.

The migration method described above is based on a four-layer architecture: An operator layer which abstracts existing transactions and workflows that may affect a subscriber's data, disassociating operator systems from actual events at the subscriber level; a network layer which abstracts existing transactions and workflows that may affect a subscriber's data, disassociating the network systems from actual events at the subscriber level; a redirection layer which enables triggered transactions and workflows that may affect a subscriber's data to be homed to the replacement system but redirected to the legacy system should a subscriber's data not be present, and finally, a migration layer which abstracts operations needed to extract/convert/inject subscriber data from existing systems/applications.

In the architecture described above, the way network and/or operator transactions which occur during the migration are dealt with depends on the type of subscriber data which is to be migrated, which itself depends on the type of application the subscriber data is provided for. For the purpose of deciding how network and/or operator transactions occurring during the migration are to be treated, a categorization of network functions by subscriber data type according to three types of subscriber data may be performed: Static data which can only be changed from the operator direction at controlled periods, semi-dynamic data which can be changed from the operator or network/user direction at random, infrequent periods, and volatile data which can be changed from the operator or network user direction at random, frequent and uncontrolled periods. An example of an intelligent network (IN) application which uses static subscriber data is e.g. 0800 service redirection, an example of an application which uses semi-dynamic data in an eVPN (enhanced Virtual Private Network) service, and applications using volatile subscriber data are e.g. prepay services and the like.

In a preferred variant, during the transfer of subscriber data of a static application, network transactions are redirected both to the legacy application and to the replacement application. This mechanism facilitates a much prized zero-impact roll-back of service in the event of failure. Since data integrity is assured, the legacy and replacement application remain synchronized during the migration and network traffic can simply be reverted to the legacy application by the redirection layer. During the migration of static data, operator transactions are not attempted, since the nature of these transactions are bulk in nature and can be scheduled to occur at a time when migration is not occurring.

In another preferred variant, during the transfer of subscriber data of a non-static application, network and/or operator transactions are buffered, the buffered network and/or operator transactions being redirected to at least one of the legacy application and the replacement application only after the transfer of the subscriber data. In such a way, the performance of transactions by either the legacy or the replacement application based on the use of obselete subscriber data can be avoided.

In a preferred improvement of this variant, after the transfer of the subscriber data of a semi-dynamic application, network and/or operator transactions are redirected both to the legacy application and to the replacement application. This mechanism also facilitates a much prized zero-impact roll-back of service in the event of failure. Since data integrity is assured by tandem/duplicate provisioning of upstream/user actions - network traffic can simply be reverted to the legacy application by the redirection layer, as both the legacy application and the replacement application remain synchronized.

In yet another preferred improvement of this variant, after the transfer of the subscriber data of a highly dynamic application, network and/or operator transactions are redirected only to the replacement application. Since data integrity is assured by the suspension mechanism, roll back can be achieved by executing the same process with the source/target elements (applications) reversed.

A second aspect of the invention is implemented in a telecommunications network, comprising: a migrations means for transferring subscriber data from a legacy application to a replacement application, a redirection means for directing network and/or operator transactions related to the subscriber data to at least one of the legacy application and the replacement application, a network means for sending network transactions related to the subscriber data to the redirection means, and an operator means for sending operator transactions related to the subscriber data to the redirection means, wherein the redirection layer directs the network and/or operator transactions during the migration selectively to at least one of the legacy application and the replacement application in dependence of the volatility of the subscriber data of the application which is migrated. The telecommunications network described above has a suitable architecture for taking into account the type of subscriber data which is to be migrated for the treatment of subscriber and/or operator transactions which may occur during the migration.

In a highly preferred embodiment, during the transfer of the subscriber data of a static application, the redirection layer redirects network transactions both to the legacy application and to the replacement application, thus keeping both applications synchronized during the migration, facilitating rollback to the legacy system in case of failure.

In another preferred embodiment, during the transfer of the subscriber data of a non-static application, the redirection layer buffers network and/or operator transactions and redirects the buffered transactions to at least one of the legacy application and the replacement application only after the transfer of the subscriber data, thus avoiding that during the migration transactions are performed which are based on obsolete subscriber data.

In a preferred improvement of this embodiment, after the transfer of subscriber data of a semi-dynamic application, the redirection layer redirects network and/or operator transactions both to the legacy application and to the replacement application. As the volume of the transactions is comparatively low in this case, the legacy and the replacement application remain synchronized, thus facilitating rollback in case of failure. The subscriber migration may occur at leisure after the data migration by using the migration function to instruct the network/operator layer to send call traffic only to the replacement application.

In a further preferred improvement, after the transfer of subscriber data of a highly dynamic application, the redirection layer redirects network and/or operator transactions only to the replacement application. In the case of highly volatile data, it is difficult to keep the legacy application and the replacement application synchronized. However, also in this case, since data integrity is assured by the suspension mechanism, roll-back can be achieved by executing the same process with the source/target elements reversed.

Further features and advantages are stated in the following description of exemplary embodiments, with reference to the figures of the drawing, which shows significant details, and are defined by the claims.

### Brief Description of the Drawings

Exemplary embodiments are shown in the diagrammatic drawing and are explained in the description below. The following are shown:
- **Figs. 1a,b**: a schematic diagram of an embodiment of a telecommunications system before and after the migration,
- **Fig. 2**: a first migration scenario for migrating static subscriber data,
- **Fig. 3**: a second migration scenario for migrating semi-dynamic subscriber data, and
- **Fig. 4**: a third migration scenario for migrating volatile subscriber data.

### Detailed Description of Preferred Embodiments

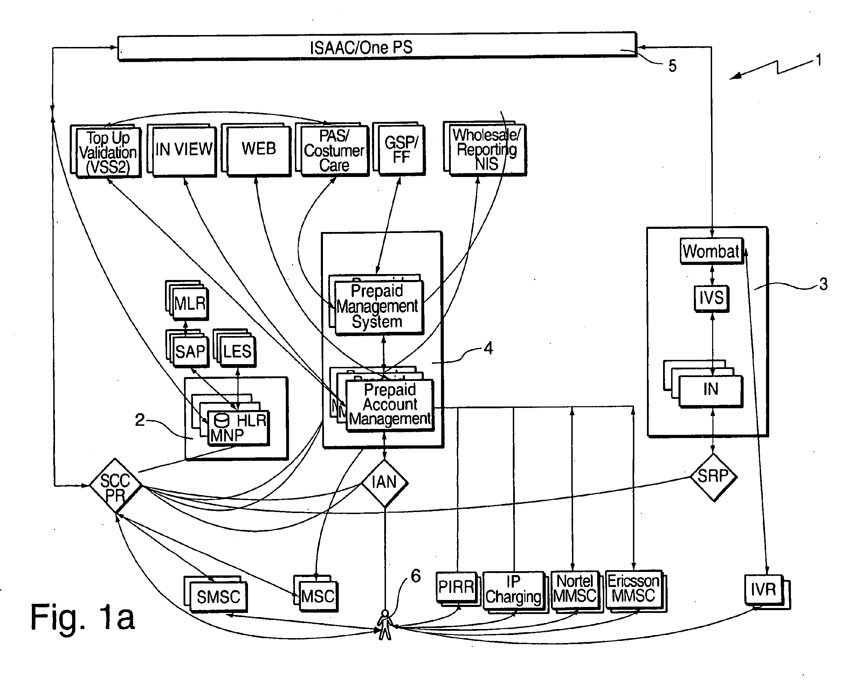

**Fig. 1a** shows a communications network **1** comprising a plurality of applications such as a home location register (HLR) **2,** an enhanced virtual private network (eVPN) **3** and a prepaid management system **4,** each of which storing subscriber data with a different level of volatility. The subscriber data stored in the HLR 2 is static, i.e. it may only be changed by an operator **5** of the network 1 at controlled periods; the subscriber data of the eVPN 3 is semi-dynamic, i.e. it may be changed by the operator 5 or an end user **6** at random, infrequent periods, whereas the subscriber data of the prepaid management system 4 is volatile, i.e. it may be changed by both the operator 5 and the end user 6 at random, frequent and uncontrolled periods.

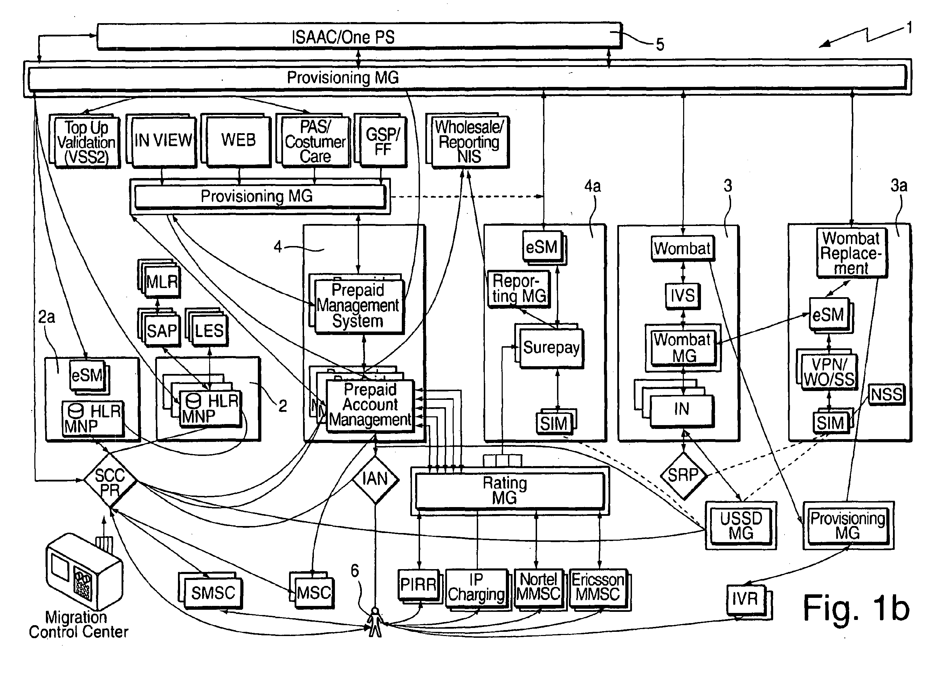

For migrating the three applications 2 to 4 shown in Fig. 1a, a replacement home location register **2a,** a replacement eVPN **3a** and a replacement prepaid management system **4a** are provided as respective replacement applications, all of which are shown in **Fig. 1b****.** For performing the migration, a migration control center **7** is provided in the communications network 1 having a global overview over the communications network **1** and having an impact (represented by circles in Fig. 1 b) on most of the network entities during the migration.

The way the migration of subscriber data of a specific application shown in Figs. 1a,b is performed depends on the type of subscriber data used in this application, which may be attributed to one of the three categories cited above depending on specific criteria. For example, the network elements/applications to be migrated may be classified by access type, e.g. as transactional in case that the access is not performed via an Intelligent Network, using ad-hoc query/response pairs where no state machine or network triggering is utilized, or as triggered in case that access is trigged by the network in response to end user action and follows an intelligent network state machine.

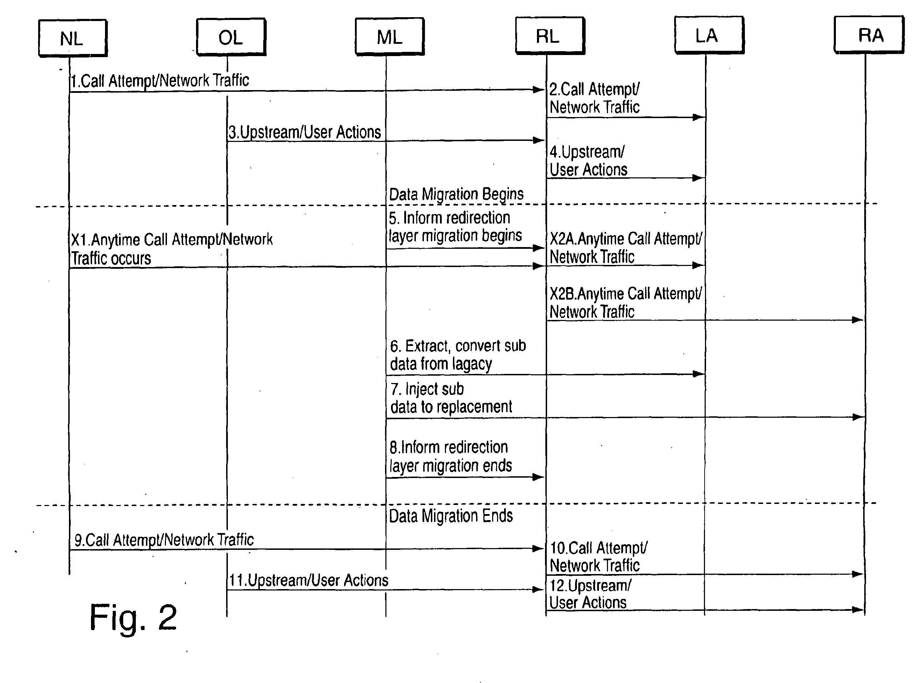

The migration control centre 7 provides several functions which are implemented in four specific layers shown in **Figs. 2 to 4****,** namely a network layer **NL,** an operator layer **OL,** a migration layer **ML,** and a redirection layer **RL.** The operator layer OL abstracts existing transactions and workflows that may affect a subscriber's data, disassociating operator systems from actual events at the subscriber level; the network layer NL abstracts existing transactions and workflows that may affect a subscriber's data, disassociating the network systems from actual events at the subscriber level; the redirection layer RL enables triggered transactions and workflows that may affect a subscriber's data to be homed to the replacement application/system but redirected to the legacy application/system should a subscriber's data not be present, and finally, the migration layer ML abstracts operations needed to extract/convert/inject subscriber data from existing applications/systems.

Specifically, the redirection layer RL is designed to provide mediation functions during the migration, which can enable: Protocol proxy to manage transactions between legacy interfaces with no impact to existing interfaces; protocol conversion to translate transactions and manage workflows between legacy and replacement interfaces, with no impact to existing interfaces, hence providing a level of transparency to existing components and interfaces; user destination selection based on per subscriber criteria, i.e. traffic can be directed either to legacy or replacement components, or both simultaneously; and transaction queuing, i.e. based on per subscriber criteria, traffic can be queued to legacy or replacement applications.

Accordingly, the migration layer ML is designed to perform a migrator function, which can: Determine the services available to the subscribers; inform mediation devices the subscribers are 'in migration'; inform the necessary network elements that the subscribers are 'in migration'; extract dynamic subscriber data from the appropriate legacy systems in order to copy, transform and inject them into the appropriate replacement systems; and inform the mediation layer the subscribers have been migrated. Mediation devices in the mediation layer will then begin to send queued transactions (if any) and new transactions to the target system and inform the necessary network elements to redirect associated network traffic to the replacement application.

By using an architecture as described above which is separated at key architectural points corresponding to the four individual layers, both legacy to replacement migration (forward migration) and replacement to legacy migration (reverse migration/rollback) can be performed with assured data integrity and recovery control may also be provided. In particular, the above architecture ensures: a single point of control and reporting, intermediate check points, verification and validation of success, and automated reverse migration.

The application of the key architectural points and the categorization of the subscriber data enables applications and elements to be migrated in a specific way which depends on the type of application and thus also on the type of subscriber data which needs to be migrated. In the following, the migration of applications with static, semi-dynamic, and volatile data is described in more detail with reference to Figs. 2 to 4.

Fig. 2 shows the development of the migration of static subscriber data used in an application such as the HLR 2 of Figs. 1a,b, implementing e.g. a 0800 service redirection. In a pre-migration state, the replacement network element, i.e. the replacement home location register 2a of Fig. 1b, is pre-configured to activation service functionality. Then, the operator mediation functions are activated in a passive way to facilitate static data migration. In this mode, all transactions are proxied to the legacy system LA. Since operator originated data changes are controllable, a single planned maintenance event can be scheduled to copy static subscriber data from legacy application LA to replacement application RA (pre-populate). After pre-population, the operator mediation functions are activated such that all transactions are proxied to both the replacement application RA and the legacy application LA. Since this is the only source of data change, this step ensures that legacy application LA and replacement application RA remain synchronized. Subscriber migration can occur at leisure by using the migration function to instruct the network layer NL to send call traffic to the replacement application RA. Rollback can be facilitated simply as both legacy and replacement applications LA, RA will always be in sync.

The chain of events before the migration (pre-migration), during the migration and after the migration (post migration) will be referred to with numerals 1. to 12. in the following for the specific example of a migration scenario shown in Fig. 2:
1. Pre migration state - a call attempt is made by an end user which is sent from the network layer NL to the redirection layer RL,
2. Pre migration state - the call attempt is directed from the redirection layer RL to the legacy application LA,
3. Pre migration state - operator (trans)actions are attempted (to modify/change subscriber data) and sent from the operator layer OL to the redirection layer RL,
4. Pre migration state - operator (trans)actions are attempted (to modify/change subscriber data) and directed from the redirection layer RL to the legacy application LA,
5. Migration begins - the migration layer ML informs the redirection layer RL that a subscriber is to be migrated.

During the migration, operator transactions are not attempted, since the nature of these transactions are bulk in nature and can be scheduled to occur at a time when migration is not occurring. Network transactions **X1** occurring during the migration are handled in the following way:
X1. At any time during migration a call (transaction) may be attempted by an end user, the transaction being sent from the network layer NL to the redirection layer RL,
X2A. The pending call attempt is proxied to the legacy application LA,
X2B. The pending call attempt is serviced by the replacement application RA since the subscriber data is static and will not be affected by servicing the call.

6. During the migration, the migration layer ML extracts subscriber data from at least one legacy application and possibly converts them to a new format,
7. During the migration, the migration layer ML injects the subscriber data to the replacement application RA,
8. Migration ends - the migration layer ML informs the redirection layer RL that a subscriber has been migrated,
9. Post migration state - a call attempt is made by an end user,
10. Post migration state - the call attempt is directed to the replacement application RL,
11. Post migration state - operator transactions are attempted (to modify/change subscriber data),
12. Post migration state - the operator transactions are directed from the redirection layer RL to the replacement application RA.

In the above example, the signaling reflects the use of the proposed architecture to migrate static data applications. Many existing intelligent network services fall into this category, such as 0800 service redirection etc. This scenario is managed with no loss of call traffic or impact to end user/operator and facilitates a much prized zero-impact roll-back of service in the event of failure. Since data integrity is assured, network traffic can simply be reverted to the legacy application LA by the redirection layer RL.

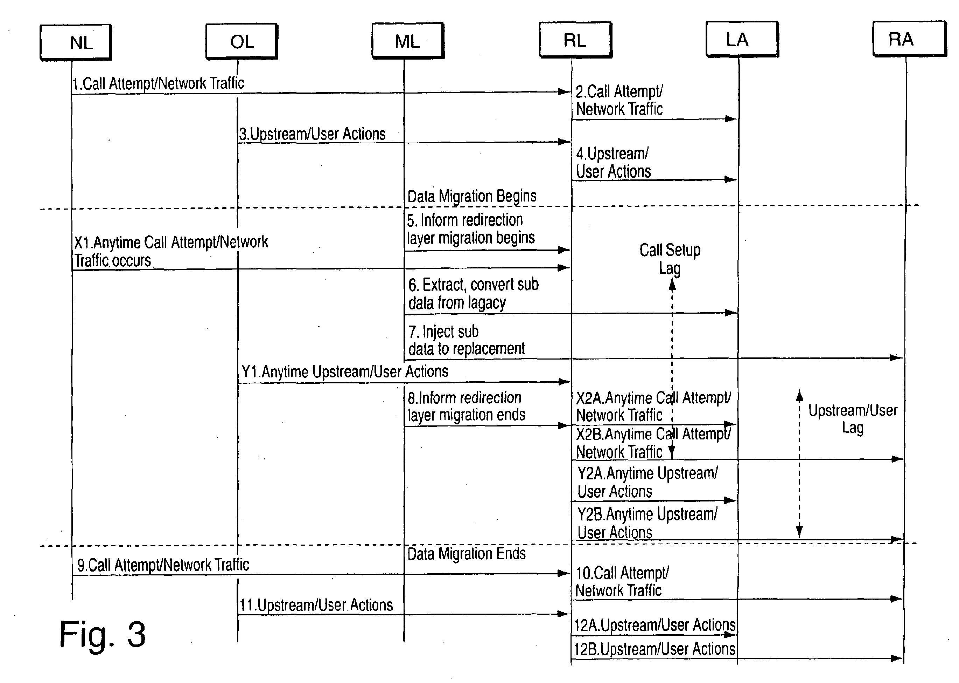

Fig. 3 shows the development of the migration of semi-dynamic subscriber data used in an application such as the eVPN 3 of Figs. 1a,b. In a pre-migration state, the replacement network elements/applications are pre-configured to activate service functionality. Then, the operator and network mediation functions are activated in a passive way to facilitate semi-dynamic data migration. In this mode, all transactions are proxied to the legacy application LA. Since operator or user originated data changes are infrequent, after subscriber pre-migration, the operator and network mediation functions are activated such that all transactions are proxied to both replacement and legacy applications LA, RA. Since these transactions are low volume in nature, legacy application LA and replacement application RA remain synchronized and the existing network is unaffected. Subscriber migration can occur at leisure by using the migration function to instruct the network layer NL to send call traffic to the replacement application RA. Rollback can be facilitated simply as both the legacy application LA and the replacement application RA will always be synchronized.

The chain of events before, during and after the migration will be referred to with numerals 1. to 12. in the following for the specific example of a migration scenario shown in Fig. 3:
1. Pre migration state - a call attempt is made by an end user
2. Pre migration state - the call attempt is directed to the legacy application LA
3. Pre migration state - operator transactions are attempted (to modify/change subscriber data)
4. Pre migration state - operator transactions are directed to the legacy application LA by the redirection layer RL
5. Migration begins - the migration layer ML informs the redirection layer RL that a subscriber is to be migrated.

All network transactions X1 and operator transactions **Y1** occurring during the migration are dealt with in the following way:
X1. At any time during migration a call may be attempted, the redirection layer RL suspends the messages for this subscriber,
Y1. At any time during migration an operator event may be attempted, the redirection layer suspends the messages for this subscriber.

6. During migration - the migration layer ML extracts subscriber data from the legacy application LA and converts them to a new format (if necessary)
7. During migration - the migration layer ML injects subscriber data to the replacement application RL,
8. During migration - the migration layer ML informs the redirection layer RL that a subscriber has been migrated.

After the migration of the subscriber data from the legacy application LA to the replacement application RA, the following steps are performed:
X2A. After the subscriber is migrated, the pending call attempt is duplicated to the legacy application LA,
X2B. After the subscriber is migrated, the pending call attempt is directed to and serviced by the replacement application RA. The end user experiences ½ second lag.
Y2A. After the subscriber is migrated, the pending operator event is duplicated to the legacy application LA;
Y2B. After the subscriber is migrated, the pending operator event is serviced by the replacement application RA and the operator experiences ½ second lag.

After the suspended transactions have been redirected to both the legacy application LA and the replacement application RA, the following steps are performed:
9. Post migration state - a call attempt is made by an end user
10. Post migration state - the call attempt is directed to the replacement application RA
11. Post migration state - operator actions are attempted (to modify/change subscriber data)
12A. Post migration state - operator actions are attempted (to modify/change subscriber data) and directed to the replacement application RA,
12B. Post migration state - operator actions are attempted (to modify/change subscriber data) and are duplicated to the legacy application LA.

In example given above, the signaling reflects the use of the proposed architecture to migrate semi-dynamic data applications. Many existing IN services fall into this category, such as eVPN service etc. This scenario is also managed with no loss of call traffic or impact to end user/operator and provides a mechanism which facilitates a much prized zero-impact roll-back of service in the event of failure. Since data integrity is assured by tandem/duplicate provisioning of upstream/user actions, network traffic can simply be reverted to the legacy application LA by the redirection layer RL.

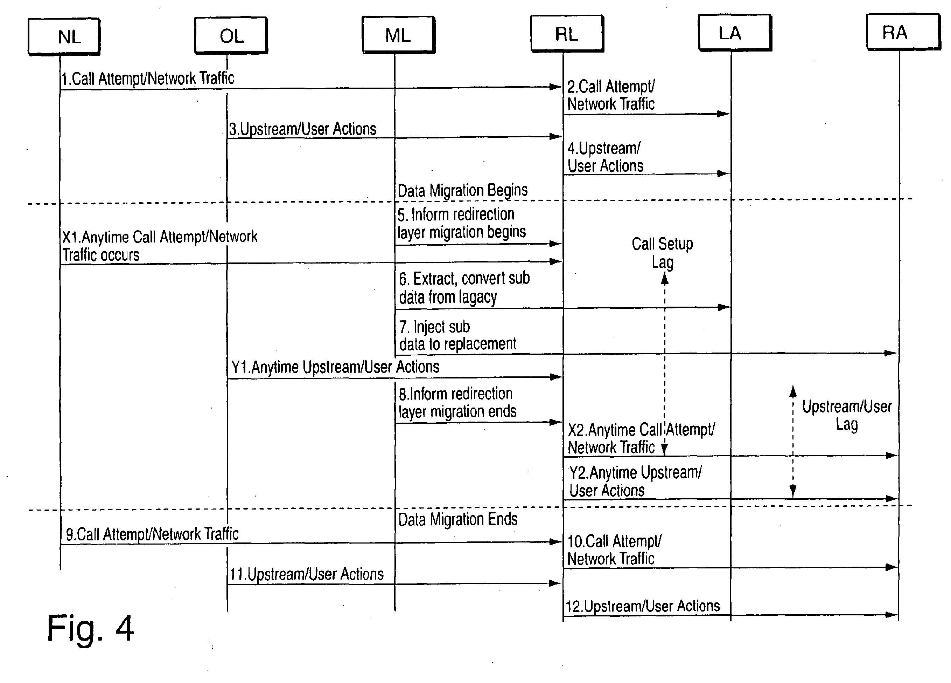

Fig. 4 shows the time development of the migration of volatile subscriber data used in an application such as the prepay service 4 of Figs. 1a,b. The volatile type of data precludes the use of either of the two previous methods as the data may change with such frequency that the use of dual/tandem proxy functions would rapidly destroy the network. Also in this case, the replacement network elements are pre-configured to activate service functionality. The operator and network mediation functions are activated in a passive way so that transactions are proxied without change to the legacy application LA. To move subscriber data from the legacy application LA to the replacement application RA, the mediation functions are instructed to queue new traffic for the subscriber in migration (if a transaction is in progress then migration must wait until completion). The migration function then extracts, converts, and injects the subscriber data into the replacement function. Finally, the mediation functions are instructed to flush pending (and all subsequent) transactions to the replacement application RA (and protocol conversion hides the new workflow). The act of moving the subscriber data takes less than a second, such that the end user or operator systems do not experience issues with the potential one second latency during the migration. Subscriber migration can occur at leisure by using the migration function to instruct the mediation functions to perform these actions per subscriber. Rollback can be facilitated with the reverse process.

The chain of events before, during and after the migration will be referred to with numerals 1. to 12. in the following for the specific example of a migration scenario shown in Fig. 4:
1. Pre migration state - a call attempt is made by an end user
2. Pre migration state - the call attempt is directed to legacy application
3. Pre migration state - operator transactions are attempted (to modify/change subscriber data)
4. Pre migration state - operator transactions are directed to the legacy_ application LA by the redirection layer RL
5. Migration begins - the migration layer ML informs the redirection layer RL that a subscriber is to be migrated.

During the migration, the operator transactions Y1 and network transactions X1 are suspended:
X1. At any time during migration a call may be attempted, the redirection layer RL suspends the messages for this subscriber
Y1. At any time during migration an operator event may be attempted, the redirection layer RL suspends the messages for this subscriber.

6. During migration - the migration layer ML extracts subscriber data from the legacy application and converts it to a new format (if applicable)
7. During migration - the migration layer injects subscriber data to the replacement application,
8. Migration ends - the migration layer informs the redirection layer that a subscriber has been migrated.

After the migration of the subscriber data from the legacy application LA to the replacement application RA, both the operator transactions Y1 and network transactions X1 are serviced by the replacement application RA:
X2. After the subscriber is migrated the pending call attempt is serviced by the replacement application RA; the end user experiences ½ second lag.
Y2. After the subscriber is migrated the pending operator event is serviced by the replacement application RA; the operator experiences ½ second lag.

After the suspended transactions have been redirected to only the replacement application RA, the following steps are performed:
9. Post migration state - a call attempt is made by an end user
10. Post migration state - the call attempt is directed to a replacement application RA
11. Post migration state - operator transactions are attempted (to modify/change subscriber data)
12. Post migration state - the operator transactions are directed to the replacement application RA by the redirection layer RL.

In the above example, the signalling reflects the use of the proposed architecture to migrate volatile data applications. Many existing IN services fall into this category such as prepay services etc. This scenario is also managed with no loss of call traffic or impact to end user/operator and facilitates zero-impact roll-back of service in the event of failure. Since data integrity is assured by the suspension mechanism, roll-back can be achieved by executing the same process with the source/target elements(applications) reversed.

With the architecture described above, subscriber data can be migrated from a legacy application to a replacement application while the service which is provided by that specific application can remain on-line. The way network and/or operator transactions occurring during the migration are dealt with depends on the type of application which is to be migrated, as the type of application determines the volatility of the subscriber data to be migrated. For each of the three degrees of volatility (static, semi-dynamic, and highly dynamic) described above, a specific treatment of these transactions is applied in the architecture described above which is implemented in the migration control centre 7 as a central station for performing the migration. The person skilled in the art will appreciate that the migration may also be performed in a distributed way, i.e. implementing the layers described above in several entities within the telecommunications network 1 which are designed for this purpose.

The model described above can be further optimised if the type of traffic is IN/call state model related. Since the act of network traffic redirection per subscriber can be risky, a supporting method can be defined. Firstly, all element traffic is first directed to the replacement application (which contains no subscriber data at this time), and the replacement application checks if a subscriber is present. On reception of a call trigger, if no subscriber is present, the replacement system/application may send the trigger back out to the network with an indicator pre-pended to the called party number based on specific criteria. The network can then analyse and redirect the call trigger to the legacy system/application. This method has the advantage that network level migration events can be performed in advance of subscriber data and operator traffic migration events.

In summary, the approach which is described above enables a comprehensive and repeatable strategy for subscriber migrations across the telecommunications domain, whilst presenting both a recognisably unique and differentiating architecture for seamless vendor, element and application independent static, semi-dynamic and extremely voliatle subscriber data and traffic migrations. Therefore, the invention presents a unique and first-ever-seen set of solutions in telecommunications element migration and provides a degree of customization and personalization that was previously not possible. Other proposals do not provide for the evolution that the telecommunications industry and customer networks have undergone and future major evolutions that it will continue to undergo, such as allowing convergence and migration to next generation networks. However, the invention described above is not intended as a replacement; rather, it is designed to augment this prior technology and enable network opeartors to leverage the particular benefits of each whilst providing a framework to address the inherent network wide issues.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the scope of the invention, as defined by the appended claims.

## Claims

1. Method for migrating subscriber data from a legacy application (LA) to a replacement application (RA) of a telecommunications network (1),
the method comprising the steps of:
in a migration means (ML), transferring the subscriber data from the legacy application (LA) to the replacement application (RA),
in a redirection means (RL), directing network and/or operator transactions (X1, Y1) related to the subscriber data to at least one of the legacy application (LA) and the replacement application (RA),
in a network means (NL), sending network transactions (X1) related to the subscriber data to the redirection means (RL),
in an operator means (OL), sending operator transactions (Y1) related to the subscriber data to the redirection means (RL), wherein
the redirection means (RL) directs the network and/or operator transactions (X1, Y1) during the migration selectively to at least one of the legacy application (LA) and the replacement application (RA) in dependence of the volatility of the subscriber data of the application which is migrated.

2. Method according to claim 1, wherein during the transfer of static subscriber data, network transactions (X1) are redirected both to the legacy application (LA) and to the replacement application (RA).

3. Method according to claim 1, wherein during the transfer of non-static subscriber data, network and/or operator transactions (X1, Y1) are buffered, the buffered network and/or operator transactions (X1,Y1) being redirected to at least one of the legacy application (LA) and the replacement application (RA) only after the transfer of the subscriber data.

4. Method according to claim 3, wherein after the transfer of semi-dynamic subscriber data , network and/or operator transactions (X1, Y1) are redirected both to the legacy application (LA) and to the replacement application (RA).

5. Method according to claim 3, wherein after the transfer of highly dynamicsubscriber data, network and/or operator transactions (X1, Y1) are redirected only to the replacement application (RA).

6. Telecommunications network (1), comprising:
a migration means (ML) for transferring subscriber data from a legacy application (LA) to a replacement application (RA),
a redirection means (RL) for directing network and/or operator
transactions (X1, Y1) related to the subscriber data to at least one of the legacy application (LA) and the replacement application (RA),
a network means (NL) for sending network transactions (X1) related to the subscriber data to the redirection means (RL), and
an operator means (OL) for sending operator transactions (Y1) related to the subscriber data to the redirection means (RL),
wherein the redirection means (RL) directs the network and/or operator transactions (X1, Y1) during the migration selectively to at least one of the legacy application (LA) and the replacement application (RA) in dependence of the volatility of the subscriber data of the application which is migrated.

7. Telecommunications network according to claim 6, wherein during the transfer of the subscriber data of a static application, the redirection means (RL) redirects network transactions (X1) both to the legacy application (LA) and to the replacement application (RA).

8. Telecommunications network according to claim 6, wherein during the transfer of non-static subscriber data, the redirection means (RL) buffers network and/or operator transactions (X1, Y1) and redirects the buffered transactions (X1, Y1) to at least one of the legacy application (LA) and the replacement application (RA) only after the transfer of the subscriber data.

9. Telecommunications network according to claim 7, wherein after the transfer of semi-dynamic subscriber data, the redirection means (RL) redirects network and/or operator transactions (X1, Y1) both to the legacy application (LA) and to the replacement application (RA).

10. Telecommunications network according to claim 7, wherein after the transfer of highly dynamic subscriber data, the redirection means (RL) redirects network and/or operator transactions (X1, Y1) only to the replacement application (RA).

## Patentansprüche

1. Verfahren zur Migration von Teilnehmerdaten von einer Altanwendung (LA) auf eine Ersatzanwendung (RA) eines Telekommunikationsnetzwerks (1), wobei das Verfahren die folgenden Schritte umfasst:
In einem Migrationsmittel (ML), Übertragen der Teilnehmerdaten von der Altanwendung (LA) auf die Ersatzanwendung (RA),
in einem Umleitungsmittel (RL), Leiten der Netzwerk- und/oder Operatortransaktionen (X1, Y1), welche sich auf die Teilnehmerdaten beziehen, zu mindestens entweder der Altanwendung (LA) oder der Ersatzanwendung (RA),
in einem Netzwerkmittel (NL), Senden der Netzwerktransaktionen (X1), welche sich auf die Teilnehmerdaten beziehen, an das Umleitungsmittel (RL),
in einem Operatormittel (OL), Senden der Operatortransaktionen (Y1), welche sich auf die Teilnehmerdaten beziehen, an das Umleitungsmittel (RL), wobei
das Umleitungsmittel (RL) die Netzwerk- und/oder Operatortransaktionen (X1, Y1) während der Migration selektiv zu mindestens entweder der Altanwendung (LA) oder der Ersatzanwendung (RA), in Abhängigkeit von der Volatilität der Teilnehmerdaten der Anwendung, welche migriert wird, leitet.

2. Verfahren nach Anspruch 1, wobei die Netzwerktransaktionen (X1) während der Übertragung von statischen Teilnehmerdaten sowohl zu der Altanwendung (LA) als auch zu der Ersatzanwendung (RA) umgeleitet werden.

3. Verfahren nach Anspruch 1, wobei die Netzwerk- und/oder Operatortransaktionen (X1, Y1) während der Übertragung von nicht-statischen Teilnehmerdaten gepuffert werden, wobei die gepufferten Netzwerk- und/oder Operatortransaktionen (X1, Y1) erst nach der Übertragung der Teilnehmerdaten zu mindestens entweder der Altanwendung (LA) oder der Ersatzanwendung (RA) umgeleitet werden.

4. Verfahren nach Anspruch 3, wobei die Netzwerk- und/oder Operatortransaktionen (X1, Y1) nach der Übertragung von halbdynamischen Teilnehmerdaten sowohl zu der Altanwendung (LA) als auch zu der Ersatzanwendung (RA) umgeleitet werden.

5. Verfahren nach Anspruch 3, wobei die Netzwerk- und/oder Operatortransaktionen (X1, Y1) nach der Übertragung von hoch dynamischen Teilnehmerdaten nur zu der Ersatzanwendung (RA) umgeleitet werden.

6. Telekommunikationsnetzwerk (1), umfassend:
Ein Migrationsmittel (ML) zum Übertragen von Teilnehmerdaten von einer Altanwendung (LA) auf eine Ersatzanwendung (RA),
ein Umleitungsmittel (RL) zum Leiten von Netzwerk- und/oder Operatortransaktionen (X1, Y1), welche sich auf die Teilnehmerdaten beziehen, zu mindestens entweder der Altanwendung (LA) oder der Ersatzanwendung (RA),
ein Netzwerkmittel (NL) zum Senden von Netzwerktransaktionen (X1), welche sich auf die Teilnehmerdaten beziehen, an das Umleitungsmittel (RL), und
ein Operatormittel (OL) zum Senden von Operatortransaktionen (Y1), welche sich auf die Teilnehmerdaten beziehen, an das Umleitungsmittel (RL),
wobei das Umleitungsmittel (RL) die Netzwerk- und/oder Operatortransaktionen (X1, Y1) während der Migration selektiv zu mindestens entweder der Altanwendung (LA) oder der Ersatzanwendung (RA), in Abhängigkeit von der Volatilität der Teilnehmerdaten der Anwendung, welche migriert wird, leitet.

7. Telekommunikationsnetzwerk nach Anspruch 6, wobei das Umleitungsmittel (RL) die Netzwerktransaktionen (X1) während der Übertragung von Teilnehmerdaten einer statischen Anwendung sowohl zu der Altanwendung (LA) als auch zu der Ersatzanwendung (RA) umleitet.

8. Telekommunikationsnetzwerk nach Anspruch 6, wobei das Umleitungsmittel (RL) während der Übertragung von nicht-statischen Teilnehmerdaten Netzwerk- und/oder Operatortransaktionen (X1, Y1) puffert und die gepufferten Transaktionen (X1, Y1) erst nach der Übertragung der Teilnehmerdaten zu mindestens entweder der Altanwendung (LA) oder der Ersatzanwendung (RA) umleitet.

9. Telekommunikationsnetzwerk nach Anspruch 7, wobei das Umleitungsmittel (RL) nach der Übertragung von halbdynamischen Teilnehmerdaten die Netzwerk- und/oder Operatortransaktionen (X1, Y1) sowohl zu der Altanwendung (LA) als auch zu der Ersatzanwendung (RA) umleitet.

10. Telekommunikationsnetzwerk nach Anspruch 7, wobei das Umleitungsmittel (RL) nach der Übertragung von hoch dynamischen Teilnehmerdaten die Netzwerk- und/oder Operatortransaktionen (X1, Y1) nur an die Ersatzanwendung (RA) umleitet.

## Revendications

1. Procédé de migration des données d'abonné d'une application héritée (LA) vers une application de remplacement (RA) d'un réseau de télécommunication (1),
le procédé comprenant les étapes de :
dans des moyens de migration (ML), transfert des données d'abonné de l'application héritée (LA) vers l'application de remplacement (RA),
dans des moyens de redirection (RL), direction des transactions de réseau et/ou d'opérateur (X1, Y1) en rapport avec les données d'abonné au moins vers l'application héritée (LA) ou vers l'application de remplacement (RA),
dans des moyens de réseau (NL), envoi des transactions de réseau (X1) en rapport avec les données d'abonné aux moyens de redirection (RL),
dans des moyens d'opérateur (OL), envoi des transactions d'opérateur (Y1) en rapport avec les données d'abonné aux moyens de redirection (RL),
les moyens de redirection (RL) dirigeant les transactions de réseau et/ou d'opérateur (X1, Y1) pendant la migration de manière sélective au moins vers l'application héritée (LA) ou vers l'application de remplacement (RA) en fonction de la volatilité des données d'abonné de l'application migrée.

2. Procédé selon la revendication 1, dans lequel, pendant le transfert de données d'abonné statiques, les transactions de réseau (X1) sont redirigées à la fois vers l'application héritée (LA) et vers l'application de remplacement (RA).

3. Procédé selon la revendication 1, dans lequel, pendant le transfert de données d'abonné non statiques, les transactions de réseau et/ou d'opérateur (X1, Y1) sont mises en tampon, les transactions de réseau et/ou d'opérateur (X1, Y1) mises en tampon étant redirigées au moins vers l'application héritée (LA) ou vers l'application de remplacement (RA) seulement après le transfert des données d'abonné.

4. Procédé selon la revendication 3, dans lequel, après le transfert de données d'abonné semi-dynamiques, les transactions de réseau et/ou d'opérateur (X1, Y1) sont redirigées à la fois vers l'application héritée (LA) et vers l'application de remplacement (RA).

5. Procédé selon la revendication 3, dans lequel, après le transfert de données d'abonné hautement dynamiques, les transactions de réseau et/ou d'opérateur (X1, Y1) sont redirigées uniquement vers l'application de remplacement (RA).

6. Réseau de télécommunication (1) comprenant :
des moyens de migration (ML) pour transférer des données d'abonné d'une application héritée (LA) vers une application de remplacement (RA),
des moyens de redirection (RL) pour diriger des transactions de réseau et/ou d'opérateur (X1, Y1) en rapport avec les données d'abonné au moins vers l'application héritée (LA) ou vers l'application de remplacement (RA),
des moyens de réseau (NL) pour envoyer des transactions de réseau (X1) en rapport avec les données d'abonné aux moyens de redirection (RL), et
des moyens d'opérateur (OL) pour envoyer des transactions d'opérateur (Y1) en rapport avec les données d'abonné aux moyens de redirection (RL),
les moyens de redirection (RL) dirigeant les transactions de réseau et/ou d'opérateur (X1, Y1) pendant la migration de manière sélective au moins vers l'application héritée (LA) ou vers l'application de remplacement (RA) en fonction de la volatilité des données d'abonné de l'application migrée.

7. Réseau de télécommunication selon la revendication 6, dans lequel, pendant le transfert de données d'abonné d'une application statique, les moyens de redirection (RL) redirigent les transactions de réseau (X1) à la fois vers l'application héritée (LA) et vers l'application de remplacement (RA).

8. Réseau de télécommunication selon la revendication 6, dans lequel, pendant le transfert de données d'abonné non statiques, les moyens de redirection (RL) mettent en tampon les transactions de réseau et/ou d'opérateur (X1, Y1) et redirigent les transactions (X1, Y1) mises en tampon au moins vers l'application héritée (LA) ou vers l'application de remplacement (RA) seulement après le transfert des données d'abonné.

9. Réseau de télécommunication selon la revendication 7, dans lequel, après le transfert de données d'abonné semi-dynamiques, les moyens de redirection (RL) redirigent les transactions de réseau et/ou d'opérateur (X1, Y1) à la fois vers l'application héritée (LA) et vers l'application de remplacement (RA).

10. Réseau de télécommunication selon la revendication 7, dans lequel, après le transfert de données d'abonné hautement dynamiques, les moyens de redirection (RL) redirigent les transactions de réseau et/ou d'opérateur (X1, Y1) uniquement vers l'application de remplacement (RA).
